# EUROPÄISCHE PATENTSCHRIFT

(11) **EP 2 922 661 B1**
(45) Veröffentlichungstag und Bekanntmachung des Hinweises auf die Patenterteilung: **22.08.2018**
(21) Anmeldenummer: 13792693.7
(22) Anmeldetag: 20.11.2013
(51) Int. Cl.: B23Q 3/155, B23Q 3/157, G05B 19/418, B23Q 39/00

(54) **VERFAHREN ZUR STEUERUNG VON WERKZEUGWECHSELVORGÄNGEN UND WERKZEUGMASCHINE**
METHOD FOR CONTROLLING TOOL CHANGING OPERATIONS AND MACHINE TOOL
PROCÉDÉ DE COMMANDE DE PROCESSUS DE CHANGEMENT D'OUTIL ET MACHINE-OUTIL

(30) Priorität: 21.11.2012 DE 102012111230
(43) Veröffentlichungstag der Anmeldung: 30.09.2015
(73) Patentinhaber: MAG IAS GmbH, 73054 Eislingen (DE)
(72) Erfinder: DAVIS, Ralph, 73054 Eislingen (DE); POMPE, Walter, 73333 Gingen/Fils (DE); MANOHARAN, Dodwell, 73728 Esslingen (DE)
(74) Vertreter: Hoeger, Stellrecht & Partner Patentanwälte mbB
(86) Internationale Anmeldenummer: PCT/EP2013/074289
(87) Internationale Veröffentlichungsnummer: WO 2014/079884

(56) Entgegenhaltungen:
- EP-A2- 1 175 958
- DE-A1- 2 239 774
- DE-A1- 10 163 294
- DE-A1- 10 236 342
- DE-A1- 19 950 318
- DE-A1-102007 016 234
- JP-A- H03 184 736
- JP-A- 2005 324 262

## Beschreibung

Die Erfindung betrifft ein Verfahren zur Steuerung von Werkzeugwechselvorgängen an einer Werkzeugmaschine, wobei die Werkzeugmaschine umfasst:
- ein Maschinengestell;
- mindestens eine Werkzeugspindel, welche an dem Maschinengestell angeordnet ist und relativ zu diesem verschieblich ist;
- eine erste Lagereinrichtung für Werkzeuge; und
- eine zweite Lagereinrichtung für Werkzeuge, welche in Kommunikation mit der ersten Lagereinrichtung und der mindestens einen Werkzeugspindel steht, wobei ein Werkzeugwechsel an der mindestens einen Werkzeugspindel über die zweite Lagereinrichtung erfolgt,
wobei ein Bearbeitungsprozess an einem Werkstück eine Sequenz von Bearbeitungsvorgängen mit jeweils einem bestimmten Werkzeug und jeweils einer bestimmten Zeitdauer umfasst und für einen Werkzeugwechsel Werkzeuge der mindestens einen Werkzeugspindel durch die zweite Lagereinrichtung in Kommunikation mit der ersten Lagereinrichtung bereitgestellt werden, und wobei dem Bearbeitungsprozess eine Sequenz von Werkzeug-Bereitstellungsvorgängen zugeordnet ist, bei der ein Werkzeug-Bereitstellungsvorgang jeweils eine bestimmte Zeitdauer aufweist,
wobei das Verfahren eine Ermittlungsstufe und eine Steuerungsstufe umfasst und in der Ermittlungsstufe für den Bearbeitungsprozess die Zeitdauern der Bearbeitungsvorgänge und der Werkzeug-Bereitstellungsvorgänge ermittelt werden und in der Steuerungsstufe die Werkzeug-Bereitstellungsvorgänge so zeitlich in Relation zu den Bearbeitungsvorgängen gruppiert werden, dass die Werkzeug-Bereitstellungsvorgänge eine minimierte Wartezeit in dem Bearbeitungsprozess bewirken.

Die Erfindung betrifft ferner eine Werkzeugmaschine, umfassend ein Maschinengestell, mindestens eine Werkzeugspindel, welche an dem Maschinengestell angeordnet ist und relativ zu diesem verschieblich ist, eine erste Lagereinrichtung für Werkzeuge und eine zweite Lagereinrichtung für Werkzeuge, welche in Kommunikation mit der ersten Lagereinrichtung der mindestens einen Werkzeugspindel steht, wobei ein Werkzeugwechsel an der mindestens einen Werkzeugspindel über die zweite Lagereinrichtung erfolgt.

Aus der PCT/EP2012/067368 vom 6. September 2012 ist eine Werkzeugmaschine bekannt, umfassend ein Maschinengestell, mindestens eine Werkzeugspindel, welche an dem Maschinengestell angeordnet ist und relativ zu diesem verschieblich ist, einen Werkstückträger und eine Lagereinrichtung für Werkzeuge, welche an dem Maschinengestell angeordnet ist, wobei an dem Maschinengestell mindestens ein drehbares Scheibenlager für Werkzeuge angeordnet ist, welches in Kommunikation mit der Lagereinrichtung steht und in Kommunikation mit der mindestens einen Werkzeugspindel steht, wobei jeder Werkzeugspindel ein eigenes Scheibenlager zugeordnet ist, und wobei die Lagereinrichtung eine Umlauffördereinrichtung umfasst. Bei dieser Werkzeugmaschine entspricht die Lagereinrichtung einer ersten Lagereinrichtung und das mindestens eine Scheibenlager einer zweiten Lagereinrichtung.

Aus der PCT/EP2012/067310 vom 5. September 2012 ist eine Werkzeugmaschine bekannt, umfassend ein Maschinengestell, mindestens eine Werkzeugspindel, welche an dem Maschinengestell angeordnet ist und relativ zu diesem verschieblich ist, einen Werkstückträger, und eine Lagereinrichtung für Werkzeuge, welche an dem Maschinengestell angeordnet ist, wobei eine Kettenlagereinrichtung in Kommunikation mit der Lagereinrichtung und der mindestens einen Werkzeugspindel steht. Bei dieser Werkzeugmaschine entspricht die Lagereinrichtung einer ersten Lagereinrichtung und die Kettenlagereinrichtung einer zweiten Lagereinrichtung.

Aus der DE 10 2006 028 970 A1 ist ein Verfahren zum Bearbeiten eines Werkstücks mit folgenden Schritten bekannt: Bereitstellen einer Werkzeugmaschine mit einer Werkzeugaufnahme zur Aufnahme eines Bearbeitungswerkzeugs, Bereitstellen eines Werkzeugmagazins mit einer Vielzahl von Lagerstellen, die mit einer Vielzahl von Bearbeitungswerkzeugen in einer ersten räumlichen Abfolge zueinander bestückt sind, und Bearbeiten des Werkstücks mit einer definierten zeitlichen Abfolge von Bearbeitungswerkzeugen, wobei im Lauf der zeitlichen Abfolge jeweils ein in der Werkzeugaufnahme eingespanntes vorheriges Bearbeitungswerkzeug durch ein nachfolgendes Bearbeitungswerkzeug aus dem Werkzeugmagazin ersetzt wird, und wobei das vorherige Bearbeitungswerkzeug an einer definierten Lagerstelle im Werkzeugmagazin abgelegt wird. Die vorherigen Bearbeitungswerkzeuge werden beim Zurücklegen in das Werkzeugmagazin in einer zweiten räumlichen Abfolge auf die Lagerstelle verteilt, wobei die zweite räumliche Abfolge verschieden von der ersten räumlichen Abfolge ist und zumindest weitgehend der zeitlichen Abfolge entspricht.

Aus der DE 43 04 361 A1 ist eine Werkzeugmaschine mit einem zugeordneten Maschinenmagazin zur Aufnahme von mehreren, in einer ersten Transportrichtung verfahrbaren Werkzeugen, einem Wechselmagazin zur Aufnahme von mehreren, in einer zweiten Transportrichtung verfahrbaren Werkzeugen, die in das Maschinenmagazin ein- oder aus dem Maschinenmagazin ausgewechselt werden sollen, sowie mit zumindest einer Übergabevorrichtung für den Werkzeugwechsel zwischen dem Maschinenmagazin und dem Wechselmagazin bekannt. Die erste und zweite Transportrichtung sind zueinander gegenläufig.
Aus der US 2010/0004107 A1 ist ein Werkzeugaustauschsystem bekannt, welches ein Werkzeugbeförderungsgerät zum Halten von Werkzeugen und Befördern der Werkzeuge zwischen einem Werkzeugmagazin und einem Bearbeitungszentrum umfasst, einen Werkzeugaustauscharm umfasst, ein Zwischenmagazin umfasst, und einen Computer zum Kontrollieren des Systems durch Bereitstellung von Bearbeitungssequenzen und Bearbeitungszeiten umfasst.
Aus der JP 09029575 A ist ein Verfahren und eine Vorrichtung zur Umordnung von Werkzeugen in einer Werkzeugmaschine bekannt.

Aus der DE 102 36 342 A1, welche die Basis für den Oberbegriff der Ansprüche 1 und 14 darstellt, ist ein Verfahren zum Bestücken von Werkzeugen in Werkzeugmagazinen bekannt, bei dem die Werkzeuge aus einer Bestückungsstation in eine Übergabestation im Werkzeugmagazin transportiert werden. Der Transport wenigstens eines Werkzeugs erfolgt während eines Zeitfensters hauptzeitparallel.
Aus der DE 101 63 294 A1 ist ein Werkzeugwechselsystem für programmgesteuerte Fräs- und Bohrmaschinen bekannt. Ein Greifer trägt mindestens drei gleich ausgebildete Greiferzangen und bildet einen Zwischenspeicher.
Aus der DE 10 2007 016 234 A1 ist ein Verfahren zur Steuerung des Beladens und Entladens von Werkzugmaschinen bekannt, bei dem die Werkzeuge aus einem Magazin zunächst in einen Zwischenspeicher oder Bereitstellungsbereich übernommen werden und von diesem aus der Werkzeugmaschine zugeführt werden.
Aus der DE 2 239 774 ist eine Werkzeugmaschine bekannt, welche ein Hauptmagazin und ein Nebenmagazin aufweist, wobei das Nebenmagazin verfahrbar ausgebildet ist.

Aus der DE 199 50 318 A1 ist ein Bearbeitungszentrum zur Serienbearbeitung kubischer Werkstücke bekannt.

Aus der EP 1 175 958 A2 ist eine automatische Werkzeugwechselvorrichtung bekannt.

Aus der JP 2005-324262 A ist eine Werkzeugmanagementvorrichtung für eine Werkzeugmaschine bekannt.

Aus der JP 03-184736 ist ein Werkzeugwechselverfahren für eine Werkzeugmaschine bekannt.

Der Erfindung liegt die Aufgabe zugrunde, ein Verfahren der eingangs genannten Art bereitzustellen, mittels welchem sich die Zeitdauer eines Bearbeitungsprozesses eines Werkstücks minimieren lässt.

Diese Aufgabe wird bei dem eingangs genannten Verfahren erfindungsgemäß dadurch gelöst, dass in der Steuerungsstufe gegebenenfalls Werkeug-Bereitstellungsvorgänge in der zeitlichen Zuordnung zu Bearbeitungsvorgängen umgruppiert werden, um die Wartezeiten zu minimieren.

Grundsätzlich sollten Werkzeug-Bereitstellungsvorgänge während Bearbeitungsvorgängen erfolgen, so dass ein Werkzeug-Bereitstellungsvorgang nicht die Zeitdauer des Bearbeitungsprozesses verlängert.

Bei dem erfindungsgemäßen Verfahren werden zunächst die Zeitdauern der Bearbeitungsvorgänge und der Werkzeug-Bereitstellungsvorgänge ermittelt und in der Steuerungsstufe lässt sich dann eine entsprechende Zuordnung durchführen, um Wartezeiten zu minimieren.

Es ist dabei grundsätzlich möglich, dass die Zuordnung einmal erfolgt und dann festgelegt wird. Es ist auch möglich, dass eine Echtzeitermittlung und Steuerung erfolgt.

Durch das erfindungsgemäße Verfahren werden entsprechende Datensätze bereitgestellt, welche einer optimierten Sequenz für den Bearbeitungsprozess und einer optimierten Sequenz für die Werkzeug-Bereitstellungsvorgänge entsprechen. Diese Daten werden dann insbesondere einer Steuerung der Werkzeugmaschine bereitgestellt, um einen Bearbeitungsvorgang einschließlich Werkzeug-Bereitstellungsvorgänge zu steuern.

Günstig ist es dabei, wenn die Zeitdauer eines Bearbeitungsprozesses an einem Werkstück sich zusammensetzt aus der Zeitdauer eines Werkstückwechselvorgangs, den Zeitdauern der einzelnen Bearbeitungsvorgänge, den Zeitdauern von Werkzeugwechselvorgängen zwischen Bearbeitungsvorgängen und Wartezeiten für Werkzeug-Bereitstellungsvorgänge, wobei ein Steuerungsziel der Steuerungsstufe ist, diese Wartezeiten zu minimieren und insbesondere zu eliminieren. Dadurch wird erreicht, dass die Zeitdauer des Bearbeitungsprozesses minimal abhängig ist von Werkzeug-Bereitstellungsvorgängen. Insbesondere soll erreicht werden, dass die Zeitdauer des Bearbeitungsprozesses unabhängig von Werkzeug-Bereitstellungsvorgängen ist. Erfindungsgemäß werden in der Steuerungsstufe Werkzeug-Bereitstellungsvorgänge in der zeitlichen Zuordnung zu Bearbeitungsvorgängen umgruppiert, um die Wartezeiten zu minimieren. Es werden dann insbesondere entsprechende Aufträge an eine Steuerung der Werkzeugmaschine gegeben, um bei einem Bearbeitungsprozess entsprechend die Umgruppierung zu berücksichtigen.
Ganz besonders vorteilhaft ist es, wenn die Werkzeug-Bereitstellungsvorgänge in dem Zeitintervall und insbesondere ausschließlich in dem Zeitintervall von Bearbeitungsvorgängen durchgeführt werden. Dadurch treten in den Bearbeitungsprozess dann keine Wartezeiten mehr für Werkzeug-Bereitstellungsvorgänge auf.
Insbesondere werden ein oder mehrere Werkzeug-Bereitstellungsvorgänge zwischen Anfang und Ende eines Zeitintervalls eines Bearbeitungsvorgangs gruppiert, wobei ein Steuerungsziel ist, dass das Ende des Zeitintervalls des Bearbeitungsvorgangs nicht überschritten wird. Dadurch ist dann der Bearbeitungsprozess unabhängig von Werkzeug-Bereitstellungsvorgängen.
Insbesondere wird in der Ermittlungsstufe und der Steuerungsstufe ein Werkstückwechsel mit seiner jeweiligen Zeitdauer berücksichtigt, wobei die Zeitdauer eines Werkstückwechsels ermittelt wird und gegebenenfalls ein oder mehrere Werkzeug-Bereitstellungsvorgänge in das Zeitintervall des Werkstückwechselvorgangs gruppiert werden. Dadurch ergibt sich eine optimierte Zeitnutzung. Für einen ersten Bearbeitungsvorgang steht dann auch das entsprechende Werkzeug zur Verfügung.
Insbesondere erfolgt im Bearbeitungsprozess zwischen unterschiedlichen Bearbeitungsvorgängen ein Werkzeugwechsel an der mindestens einen Werkzeugspindel. Im Bearbeitungsprozess lässt sich dann ein Werkstück auf unterschiedliche Weise bearbeiten. Die Werkzeug-Bereitstellungsvorgänge müssen dafür sorgen, dass das Werkzeug bereit ist, welches für den nächsten Bearbeitungsvorgang benötigt wird.

Bei einer Ausführungsform ist eine Simulationsstufe vorgesehen, bei der in der Ermittlungsstufe die Zeitdauern für Bearbeitungsvorgänge und/oder Werkzeug-Bereitstellungsvorgänge berechnet und/oder vorgeben werden. In der Simulationsstufe wird dann eine optimierte Gruppierung der Werkzeug-Bereitstellungsvorgänge in dem Bearbeitungsprozess berechnet und die entsprechend festgelegte Sequenz wird dann für die Bearbeitungsprozesse verwendet.

Insbesondere werden Zeitdauern aus einer Arbeitsfolgetabelle für Bearbeitungsvorgänge, einer Konfigurationstabelle für die zu verwendenden Werkzeuge und einer Tabelle für eine Lagereinrichtungsbelegung berechnet und/oder vorgegeben. In der Arbeitsfolgetabelle sind die Bearbeitungsvorgänge in der zeitlichen Reihenfolge mit dem jeweils zu verwendenden Werkzeug gelistet. In der Tabelle für eine Lagereinrichtungsbelegung ist gelistet, an welcher Position entsprechende Werkzeuge sind. Es lässt sich dann ermitteln, wie lange es dauert, dass insbesondere in der ersten Lagereinrichtung ein Werkzeug von seiner aktuellen Position in eine Übergabeposition an die zweite Lagereinrichtung bewegt wird.

Ganz besonders vorteilhaft ist es, wenn eine Beobachtungsstufe vorgesehen ist, in der die Zeitdauern durch Beobachtung der tatsächlichen Vorgänge gemessen werden. Es lässt sich dadurch auch während eines Bearbeitungsprozesses ermitteln und insbesondere ständig ermitteln, wie die momentanen Zeitdauern sind. Dadurch lässt sich gewissermaßen "in situ" die Optimierung anpassen. Es lässt sich auch während eines Bearbeitungsprozesses eine Umgruppierung durchführen, wenn notwendig. Es kann dadurch eine Anpassung an Parameteränderungen erfolgen. Beispielsweise kann es in der Praxis vorkommen, dass ein Bearbeitungsvorgang länger dauert als ursprünglich erwartet. Es lässt sich dadurch ein selbstlernendes System realisieren, welches bezüglich der Zeitdauer des Bearbeitungsprozesses immer optimiert betrieben ist.

Es ist dann insbesondere günstig, wenn die Beobachtung in Echtzeit erfolgt, so dass entsprechend auftretende Veränderungen umgehend erfasst werden können.

Günstig ist es, wenn die Beobachtungsstufe eine Einheit umfasst, welche an einer Steuerung der Werkzeugmaschine für den Bearbeitungsprozess gekoppelt ist. Dadurch lässt sich auf einfache Weise eine Echtzeit-Ermittlung der entsprechenden Zeitdauern realisieren.

Es ist ferner günstig, wenn während eines Bearbeitungsprozesses ausgelöst durch die Beobachtungsstufe bei Bedarf eine oder mehrere Änderungen in der Steuerungsstufe bezüglich Werkzeug-Bereitstellungsvorgängen erfolgt. Dadurch lässt sich an einem Bearbeitungsprozess angepasst an die tatsächlich vorliegenden Verhältnisse gegebenenfalls eine Umgruppierung durchführen, um die Zeitdauer des Bearbeitungsprozesses zu minimieren.

Insbesondere erfolgt dann die Änderung oder Änderungen so, dass die zeitliche Positionierung von einem oder mehreren Werkzeug-Bereitstellungsvorgängen in der Sequenz von Werkzeug-Bereitstellungsvorgängen geändert wird. Grundsätzlich ist es dabei so, dass keine Änderung in der Sequenz der Abfolge der Werkzeuge erfolgt. Die Änderung in der Sequenz erfolgt derart, dass sich die Gruppierung von Werkzeug-Bereitstellungsvorgängen zu bestimmten Bearbeitungsvorgängen ändern kann.

Bei einer Ausführungsform wird in der Ermittlungsstufe eine Positionierzeit für ein Werkzeug an der ersten Lagereinrichtung zur Übergabe an die zweite Lagereinrichtung und eine Übergabezeit für die Übergabe ermittelt, wobei die Summe dieser Zeiten eine Zeitdauer eines Werkzeug-Bereitstellungsvorgangs ist, und es wird geprüft, wie diese Zeitdauer zu der Zeitdauer eines Bearbeitungsvorgangs liegt. Die Übergabezeit kann üblicherweise als Festzeit angenommen werden. Je nach Ergebnis dieser Überprüfung werden dann entsprechende Daten generiert, um eine Umgruppierung durchzuführen.

Insbesondere wird, wenn die Zeitdauer des Bearbeitungsvorgangs größer oder gleich wie die Zeitdauer des Werkzeug-Bereitstellungsvorgans ist, in der Steuerungsstufe ein Auftrag zur Werkzeug-Bereitstellung generiert. Es wird dann eine Umgruppierung durchgeführt.

Wenn die Zeitdauer des Bearbeitungsvorgangs kleiner ist als die Zeitdauer der Werkzeug-Bereitstellung und größer ist als die Positionierzeit, dann generiert die Steuerungsstufe einen Auftrag zur Vorpositionierung der ersten Lagereinrichtung. Auch dadurch lässt sich eine Zeitoptimierung erreichen. Ergibt die Überprüfung, dass die beiden genannten Bedingungen nicht erfüllt sind, so wird zu dem nächsten Bearbeitungsvorgang übergegangen und es werden dann die entsprechenden Prüfungen für die entsprechenden Werkzeug-Bereitstellungen für nächste Bearbeitungsvorgänge durchgeführt.

Insbesondere wird dabei geprüft, ob in einem Zeitintervall eines Bearbeitungsvorgangs, in dem ein Auftrag für einen Werkzeug-Bereitstellungsvorgang ergangen ist, dann noch Aufträge für einen oder mehrere weitere Werkzeug-Bereitstellungsvorgänge erteilbar sind. Es lässt sich dadurch erreichen, dass gegebenenfalls mehrere Werkzeug-Bereitstellungsvorgänge während eines Intervalls eines Bearbeitungsvorgangs durchgeführt werden. Es lassen sich dann beispielsweise bezüglich der Zeitdauer lange Bearbeitungsvorgänge dazu nutzen, mehrere Werkzeug-Bereitstellungsvorgänge durchzuführen. Dadurch wiederum ist es beispielsweise möglich, Bearbeitungsvorgänge mit relativ kurzer Zeitdauer für Werkzeug-Bereitstellungsvorgänge ungenutzt zu lassen, um entsprechende Wartezeiten zu minimieren beziehungsweise zu eliminieren.

Bei einer Ausführungsform wird mindestens einmal der Bearbeitungsprozess ohne Eingriff der Steuerungsstufe durchgeführt und es werden die Zeitdauern ermittelt. Ausgehend von diesen ermittelten Werten kann dann eine Optimierung mit gegebenenfalls Umgruppierung stattfinden. Es ist aber auch grundsätzlich möglich, dass die entsprechenden Zeitdauern beispielsweise direkt aus der Steuerung der Werkzeugmaschine ermittelt werden und dann ausgehend von diesen Daten eine Umgruppierung stattfindet.

Es ist dann günstig, wenn anschließend Zeitpunkte zur Werkzeug-Bereitstellung berechnet werden und die berechneten Zeitpunkte für die Werkzeug-Bereitstellung verwendet werden gegebenenfalls mit einer Umgruppierung.

Insbesondere ist das erfindungsgemäße Verfahren in eine Steuerungseinrichtung der Werkzeugmaschine implantiert, wobei insbesondere in der Steuerungsstufe Aufträge für die Werkzeug-Bereitstellung generiert werden. Das erfindungsgemäße Verfahren stellt dann vorzugsweise die Daten bereit, welche einen bezüglich seiner Zeitdauer optimierten Bearbeitungsprozess ermöglichen. Diese Daten werden durch die Steuerungseinrichtung genutzt, um den Bearbeitungsprozess tatsächlich zu optimieren, indem insbesondere dann eine entsprechende Ansteuerung der ersten Lagereinrichtung und der zweiten Lagereinrichtung erfolgt.

Die erste Lagereinrichtung ist insbesondere ein Hintergrundmagazin für die zweite Lagereinrichtung. Vorzugsweise umfasst die erste Lagereinrichtung eine Vielzahl von Plätzen (beispielsweise mehr als 60). Die Anzahl der Plätze der zweiten Lagereinrichtung ist klein gegenüber der Anzahl der Plätze der ersten Lagereinrichtung. Die zweite Lagereinrichtung kann beispielsweise ein Kettenmagazin umfassen oder ein oder mehrere drehbare Scheibenlager.

Günstig ist es, wenn die zweite Lagereinrichtung ein Magazin pro Werkzeugspindel umfasst. Dadurch ergibt sich ein zeitlich optimierter Werkzeugaustausch.

Bei einer Ausführungsform umfasst die zweite Lagereinrichtung mindestens ein (drehbares) Scheibenlager oder ein Kettenmagazin.

Erfindungsgemäß wird eine Werkzeugmaschine der eingangs genannten Art bereitgestellt, welche eine Steuerungseinrichtung zur Steuerung von Bearbeitungsvorgängen an der Werkzeugmaschine umfasst, wobei die Steuerungseinrichtung eine Werkzeugwechseleinheit umfasst, durch welche das erfindungsgemäße Verfahren durchführbar ist oder durchgeführt wird.

Die Werkzeugmaschine weist die wie bereits im Zusammenhang mit dem erfindungsgemäßen Verfahren erläuterten Vorteile auf.

Bei einem Ausführungsbeispiel ist die erste Lagereinrichtung an dem Maschinengestell angeordnet. Dadurch lässt sich insbesondere eine Übergabezeit für Werkzeuge von der ersten Lagereinrichtung und die zweite Lagereinrichtung minimieren.

Günstig ist es, wenn die erste Lagereinrichtung eine Mehrzahl von beweglichen Lagerplätzen aufweist und insbesondere eine Umlauffördereinrichtung umfasst. Dadurch lässt sich eine große Anzahl von Werkzeugen an der ersten Lagereinrichtung lagern und entsprechend lässt sich auf einfache Weise ein Werkzeug an einer Übergabeposition der ersten Lagereinrichtung zu der zweiten Lagereinrichtung beziehungsweise von der zweiten Lagereinrichtung auf die erste Lagereinrichtung erreichen.

Die nachfolgende Beschreibung bevorzugter Ausführungsformen dient im Zusammenhang mit den Zeichnungen der näheren Erläuterung der Erfindung. Es zeigen:
- Figur 1: eine perspektivische Teildarstellung eines Ausführungsbeispiels einer erfindungsgemäßen Werkzeugmaschine (ohne Verkleidung und mit einer Teildarstellung einer Lagereinrichtung), wobei Werkzeuge über eine Störkontur angedeutet sind;
- Figur 2: die Werkzeugmaschine gemäß Figur 1 in einer Seitenansicht;
- Figur 3: die Werkzeugmaschine gemäß Figur 1 in einer Vorderansicht;

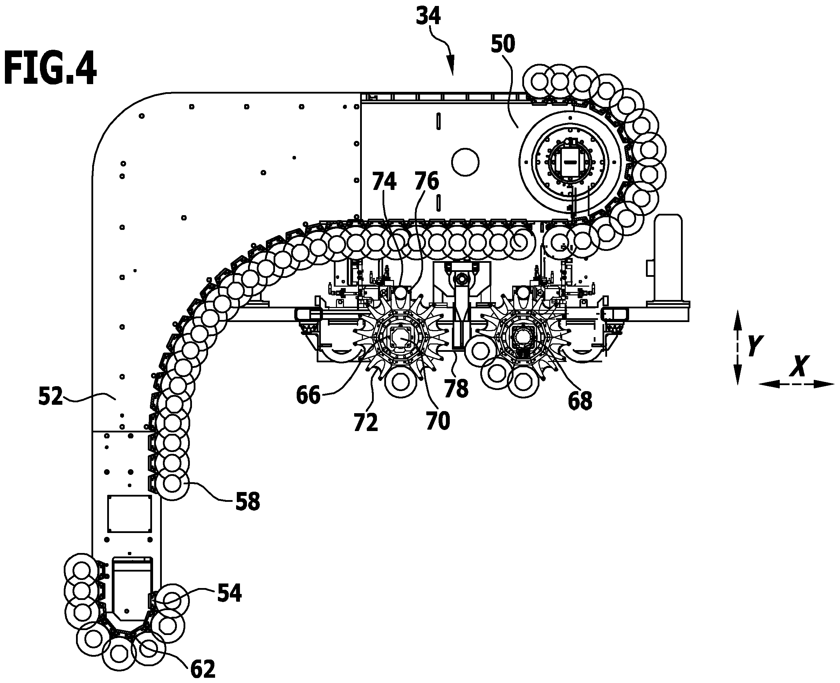

- Figur 4: ein Ausführungsbeispiel einer Lagereinrichtung (erstes Magazin) mit Lagerscheiben (zweites Magazin) bei der Werkzeugmaschine gemäß Figur 1;

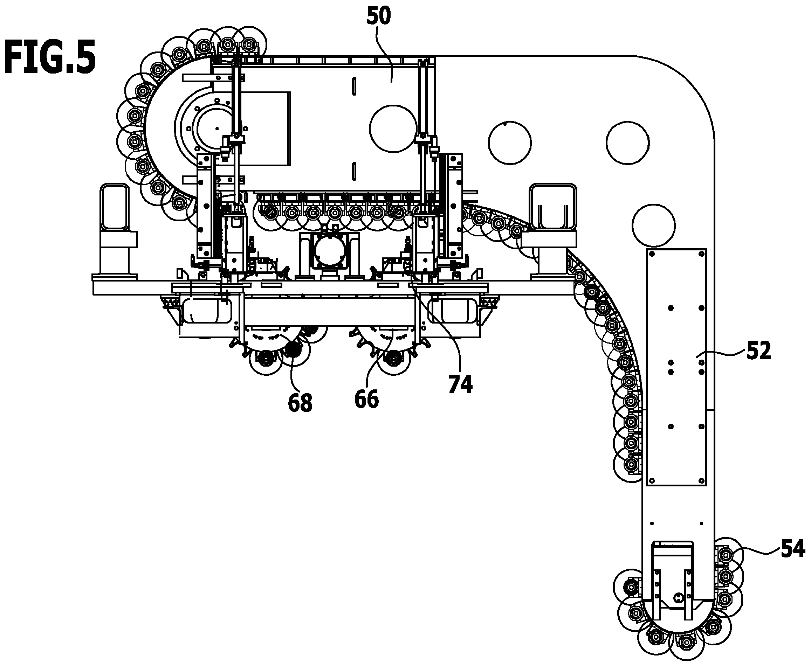

- Figur 5: eine Ansicht des Lagersystems gemäß Figur 5 von einer anderen Seite her;
- Figur 6: eine schematische Blockschaltbilddarstellung einer Steuerungseinrichtung eines Ausführungsbeispiels einer erfindungsgemäßen Werkzeugmaschine;
- Figur 7: eine schematische Darstellung von Schritten zur Erstellung und Nutzung einer Werkzeug-Vorbereitungstabelle;
- Figur 8: eine schematische Darstellung eines Beispiels einer Sequenz eines Bearbeitungsprozesses; und
- Figur 9: ein Beispiel einer Sequenz, welche aus der Sequenz gemäß Figur 8 erhalten wurde nach Durchführung eines Beispiels des erfindungsgemäßen Verfahrens.

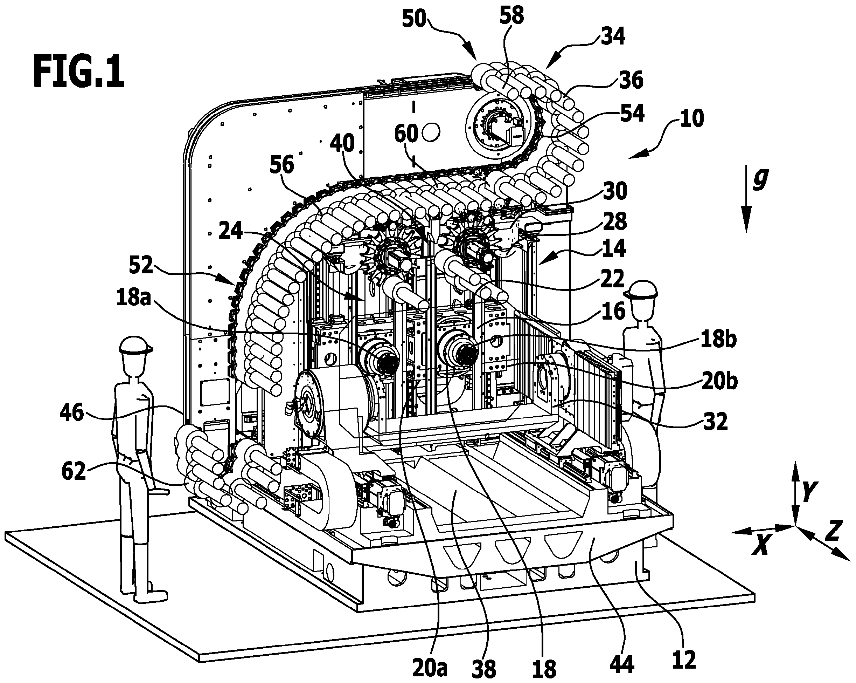

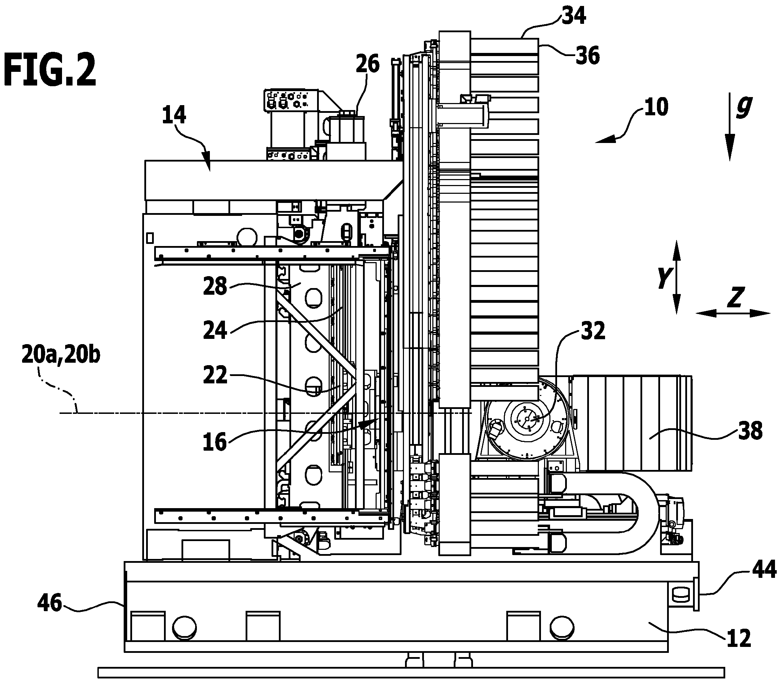

Ein Ausführungsbeispiel einer Werkzeugmaschine ist ein Bearbeitungszentrum. Eine Ausführungsform eines Bearbeitungszentrums, welches in den Figuren 1 bis 3 in Teildarstellung (ohne Verkleidung) schematisch gezeigt und dort mit 10 bezeichnet ist, umfasst ein Maschinenbett 12, an welchem ein Maschinengestell 14 angeordnet ist. Das Maschinengestell 14 ist portalartig ausgebildet und ragt in einer bezogen auf die Schwerkraftrichtung g vertikalen Richtung über das Maschinenbett 12 hinaus. An dem Maschinengestell 14 ist eine Werkzeugträgereinrichtung 16 gehalten, welche mindestens eine Werkzeugspindel 18 umfasst.

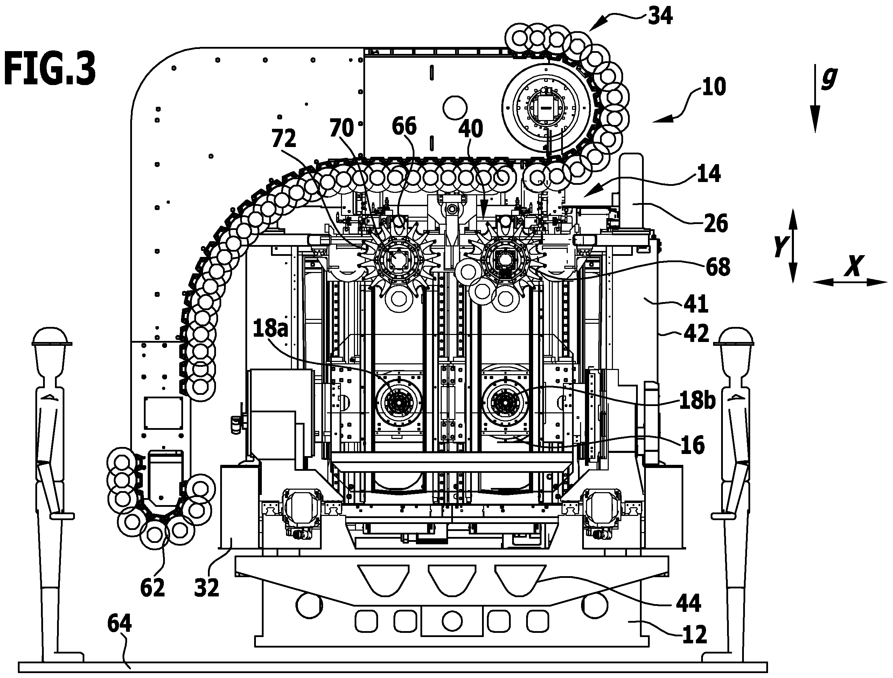

Bei dem gezeigten Ausführungsbeispiel umfasst die Werkzeugträgereinrichtung 16 eine erste Werkzeugspindel 18a und eine zweite Werkzeugspindel 18b. Ein an den jeweiligen Werkzeugspindeln 18a, 18b gehaltenes Werkzeug ist um eine Rotationsachse 20a, 20b rotierbar. Die Rotationsachsen 20a, 20b liegen parallel zueinander. Sie sind parallel zu einer Z-Richtung orientiert, welche bei der Darstellung gemäß Figur 3 senkrecht zur Zeichenebene liegt. Die Z-Richtung ist bezogen auf die Schwerkraftrichtung g insbesondere eine horizontale Richtung.

Die Werkzeugträgereinrichtung 16 ist als Schlitten 22 ausgebildet, welcher an einer Schlittenführung 24 gehalten ist und über die Schlittenführung 24 in einer Y-Richtung (Richtung und Gegenrichtung) linear beweglich ist. Die Y-Richtung liegt quer und insbesondere senkrecht zur Z-Richtung. Bezogen auf die Schwerkraftrichtung g ist die Y-Richtung insbesondere eine vertikale Richtung.

Zum Antrieb der Bewegung des Schlittens 22 in der Y-Richtung und zu dessen Positionierung ist dem Schlitten 22 eine Antriebseinrichtung 26 zugeordnet. Diese kann beispielsweise einen Kugelgewindetrieb oder einen Linearmotor umfassen.

Der Schlitten 22 ist selber an einem Schlitten 28 gehalten, welcher in einer X-Richtung (Richtung und Gegenrichtung) an einer Schlittenführung 30 linear verschieblich ist. Zur Verschiebung und Positionierung ist ein entsprechender Antrieb vorgesehen. Die X-Richtung ist quer und insbesondere senkrecht zu der Y-Richtung und der Z-Richtung. Die X-Richtung ist bezogen auf die Schwerkraftrichtung g insbesondere eine horizontale Richtung.

An dem Maschinenbett 12 ist (mindestens) ein Werkstückträger 32 angeordnet. Die erste Werkzeugspindel 18a und die zweite Werkzeugspindel 18b und damit daran gehaltene Werkzeuge und der Werkstückträger 32 sind in der Z-Richtung (Richtung und Gegenrichtung) relativ zueinander beweglich. Ein an dem Werkstückträger 32 gehaltenes Werkstück und die Werkzeugspindel 18a bzw. 18b sind dadurch relativ zueinander in der X-Richtung als erste Richtung, der Y-Richtung als zweite Richtung und der Z-Richtung als dritte Richtung verschieblich.

Bei einem Ausführungsbeispiel sind die Werkzeugspindeln 18a, 18b in der Z-Richtung zur Bearbeitung eines Werkstücks nicht beweglich und der Werkstückträger 32 ist in der Z-Richtung verschieblich an dem Maschinenbett gehalten. Dem Werkstückträger 32 ist dazu ein Antrieb zugeordnet.

Bei einem alternativen Ausführungsbeispiel sind die erste Werkzeugspindel 18a und die zweite Werkzeugspindel 18b verschieblich an der Werkzeugträgereinrichtung 16 gehalten, um eine Z-Verschieblichkeit zu ermöglichen.

Es ist auch möglich, eine Z-Verschieblichkeit der Werkzeugspindeln 18a, 18b an der Werkzeugträgereinrichtung 16 und eine Z-Verschieblichkeit des Werkstückträgers 32 an dem Maschinenbett zu kombinieren.

Es kann beispielsweise auch vorgesehen sein, dass der Werkstückträger 32 um eine beispielsweise vertikale und/oder horizontale Achse drehbar ist.

Ein entsprechendes Bearbeitungszentrum ist beispielsweise in der WO 2009/033920 A1 beschrieben. Auf diese Druckschrift wird Bezug genommen und diese Druckschrift wird zum Teil der Offenbarung gemacht.

Bei dem gezeigten Ausführungsbeispiel weist das Bearbeitungszentrum 10 eine erste Lagereinrichtung 34 für Werkzeuge 36 auf, welche mit einem Teilbereich oberhalb eines Arbeitsraums 38, in welchem Werkstücke bearbeitet werden, angeordnet ist. Die Werkzeuge 36 sind über ihre Störkontur (maximale äußeren Abmessungen) angedeutet.

Ferner ist eine Werkzeugwechseleinrichtung 40 vorgesehen, über welche Werkzeuge 36 an die Werkzeugspindeln 18a und 18b einsetzbar sind und von dieser entnehmbar sind.

Das Bearbeitungszentrum 10 kann auch nur eine einzige Werkzeugspindel umfassen oder mehr als zwei Werkzeugspindeln umfassen.

Das Bearbeitungszentrum 10 weist eine Steuerungseinrichtung 41 auf, welche mindestens teilweise in einem Schaltkasten 42 angeordnet ist. Über die Steuerungseinrichtung 41 lassen sich Abläufe der Werkstückbearbeitung steuern.

Das Bearbeitungszentrum 10 hat eine Vorderseite 44 und eine Rückseite 46. Der Arbeitsraum 38 weist zu der Vorderseite 44 zu.

Die erste Lagereinrichtung 34 ist Teil eines Lagersystems 48. Die Lagereinrichtung 34, welche an dem Maschinengestell 14 angeordnet ist, umfasst einen ersten Bereich 50, welcher oberhalb des Arbeitsraums 38 angeordnet ist. Ferner umfasst die Lagereinrichtung 34 einen zweiten Bereich 52, welcher seitlich neben dem Arbeitsraum angeordnet ist. Die Lagereinrichtung 34 hat eine in der Draufsicht L-förmige Gestalt. Sie umfasst eine Umlauffördereinrichtung 54, welche insbesondere als Kettenförderer ausgebildet ist. An der Umlauffördereinrichtung 54 sind Lagerplätze 56 angeordnet, wobei ein Lagerplatz 56 jeweils ein Werkzeug 58 aufnehmen kann. Ein Lagerplatz 56 weist eine entsprechende Schnittstelle beispielsweise für eine HSK-Aufnahme auf. Durch die Umlauffördereinrichtung 54 lassen sich die Lagerplätze 56 und damit auch Werkzeuge 58 in einem geschlossenen Umlauf transportieren. Es lassen sich dadurch Werkzeuge 58 in einem Bereich 60 oberhalb (bezogen auf die Schwerkraftrichtung g) des Arbeitsraums 38 den Werkzeugspindeln 18a, 18b bereitstellen.

Der zweite Bereich 52 der ersten Lagereinrichtung 34 hat an einer Unterseite 62 einen Abstand zu einem Boden 64 (vergleiche insbesondere Figur 3), welcher höchstens 1,5 m beträgt. Dadurch kann in der Nähe der Unterseite 62 ein Bediener die Lagereinrichtung 34 beladen bzw. entladen, das heißt es können dort insbesondere manuell Werkzeuge ausgetauscht werden. Es ist beispielsweise auch möglich, dass dem zweiten Bereich 52 ein eigene Werkzeugbeladestation/Werkzeugentladestation zugeordnet ist, durch die automatisch die Lagereinrichtung 34 beladbar und entladbar ist.

Die Lagereinrichtung 34 bildet ein erstes Magazin für Werkzeuge für die Werkzeugmaschine 10. Sie weist eine Vielzahl von Lagerplätzen 56 auf. Insbesondere weist sie mehr als dreißig Lagerplätze auf. Bei einem Ausführungsbeispiel weist die erste Lagereinrichtung 34 zweiundneunzig Lagerplätze 56 auf.

Das Lagersystem 48 umfasst ferner als zweite Lagereinrichtung 67 ein erstes Scheibenlager 66 und ein zweites Scheibenlager 68. Das erste Scheibenlager 66 ist der ersten Werkzeugspindel 18a zugeordnet und das zweite Scheibenlager 68 ist der zweiten Werkzeugspindel 18b zugeordnet.

Die Scheibenlager 66, 68 sind jeweils um eine Achse 70 drehbar an dem Maschinengestell 14 angeordnet. Die Drehachse 70 ist dabei parallel zu der Z-Richtung ausgerichtet.

Das erste Scheibenlager 66 und das zweite Scheibenlager 68 sind in der X-Richtung beabstandet zueinander. Dieser Abstand zwischen dem ersten Scheibenlager 66 und dem zweiten Scheibenlager 68 ist insbesondere fest.

Das erste Scheibenlager 66 und das zweite Scheibenlager 68 sind zwischen dem Arbeitsraum 38 und dem ersten Bereich 50 der Lagereinrichtung 34 angeordnet. Sie sind insbesondere unterhalb des ersten Bereichs 50 der Lagereinrichtung 34 und oberhalb des Arbeitsraums 38 positioniert. Das erste Scheibenlager 66 und das zweite Scheibenlager 68 stehen jeweils in Kommunikation mit der Lagereinrichtung 34 (und zwar mit dem ersten Bereich 50 dort) und mit der zugeordneten Werkzeugspindel 18a bzw. 18b.

Ein Scheibenlager 66 bzw. 68 weist eine Mehrzahl von Lagerplätzen 72 auf, welche an einer kreisförmigen Scheibe angeordnet sind. Ein Lagerplatz 72 umfasst beispielsweise eine HSK-Schnittstelle. Die Lagerplätze 72 sind dabei umfänglich um das jeweilige Scheibenlager 66 bzw. 68 verteilt und zwar derart, dass von außen ein an einem Lagerplatz 72 gelagertes Werkzeug entnommen werden kann.

Die Scheibenlager 66 und 68 bilden ein zweites Magazin (Puffermagazin) für Werkzeuge, wobei die Anzahl der Lagerplätze 72 des erstes Scheibenlagers 66 und des zweiten Scheibenlagers 68 jeweils kleiner ist als die Anzahl der Lagerplätze 56 der Lagereinrichtung 34. Beispielsweise weist das erste Scheibenlager 66 und das zweite Scheibenlager 68 jeweils eine Anzahl von zehn Lagerplätzen 72 auf.

Insbesondere sind das erste Scheibenlager 66 und das zweite Scheibenlager 68 gleich ausgebildet.

Es ist (mindestens) eine Übergabestation 74 vorgesehen, welche zur Übertragung von Werkzeugen zwischen der Lagereinrichtung 34 und dem jeweiligen Scheibenlager 66, 68 dient. Die Übergabestation 74 umfasst dabei mindestens einen Platz 76 für ein Werkzeug. Über diesen Platz 76 lässt sich ein Werkzeug an dem entsprechenden Scheibenlager 66, 68 aufnehmen und an die Lagereinrichtung 34 (an den ersten Bereich 50 dort) transportieren bzw. umgekehrt lässt sich ein Werkzeug von der Lagereinrichtung 34 nehmen und dann zu dem entsprechenden Scheibenlager 66 bzw. 68 transportieren.

Bei einem Ausführungsbeispiel umfasst die Übergabestation 74 zwei Plätze 76, sodass gleichzeitig zwei Werkzeuge aufgenommen werden können.

Die Übergabestation 74 ist beweglich ausgestaltet, um eine Übergabe zwischen der Lagereinrichtung 34 und dem jeweiligen Scheibenlager 66, 68 zu ermöglichen.

Die Übergabestation 74 umfasst beispielsweise einen Schlitten für eine Linearbewegung zwischen dem ersten Bereich 50 der Lagereinrichtung 34 und dem entsprechenden Scheibenlager 66, 68 oder beispielsweise ein schwenkbares Element.

Insbesondere ist dem ersten Scheibenlager 66 und dem zweiten Scheibenlager 68 jeweils eine eigene Übergabestation 74 zugeordnet.

Es ist grundsätzlich auch möglich, dass das erste Scheibenlager 66 und das zweite Scheibenlager 68 an einem Schlitten angeordnet sind, welcher an dem Maschinengestell 14 beweglich ist. Dieser Schlitten ist beispielsweise in der Y-Richtung, oder der X-Richtung, oder in der Y-Richtung und X-Richtung beweglich.

Über solch einen Schlitten lässt sich eine Übergabeeinrichtung ausbilden. Durch Bewegung des Schlittens können dann die Scheibenlager 66, 68 in die Nähe des ersten Bereichs 50 der Lagereinrichtung gefahren werden, um eine direkte Übergabe zu ermöglichen.

Es ist auch möglich, auch wenn Übergabestationen 74 vorgesehen sind, dass das erste Scheibenlager 66 und das zweiten Scheibenlager 68 an einem Schlitten 78 angeordnet sind, welcher in der X-Richtung und/oder Y-Richtung und/oder Z-Richtung beweglich ist. Dadurch lässt sich der Schlitten mit dem ersten Scheibenlager 66 und dem zweiten Scheibenlager 68 den Werkzeugspindeln 18a, 18b zuführen.

Es ist alternativ auch möglich, dass für einen Werkzeugaustausch die Werkzeugspindeln 18a, 18b den Scheibenlagern 66, 68 zugeführt werden und zwar derart, dass ein Werkzeugaustausch ermöglicht ist.

Es kann beispielsweise auch vorgesehen sein, dass der Schlitten 78 nur eine Beweglichkeit in der Z-Richtung aufweist. Die Z-Richtung ist parallel zu einer Längserstreckungsrichtung der Werkzeugspindeln 18a, 18b. Durch eine entsprechende Verschieblichkeit des Schlittens 78 in der Z-Richtung lässt sich eine Aushebebewegung für ein Werkzeug erreichen.

Die Werkzeugmaschine funktioniert bezüglich Werkzeugwechseln wie folgt:
Die erste Lagereinrichtung 34 bildet ein Hintergrundmagazin (erstes Magazin) für Werkzeuge. Durch die Scheibenlager 66, 68, wobei jeweils genau ein Scheibenlager einer Werkzeugspindel zugeordnet ist (das erste Scheibenlager 66 ist der ersten Werkzeugspindel 18a zugeordnet und das zweite Scheibenlager 68 ist der zweiten Werkzeugspindel 18b zugeordnet), ist ein Pufferspeicher für Werkzeuge gebildet, wobei die Übergabestation oder Übergabestationen 74 für eine Übergabe von Werkzeugen zwischen der Lagereinrichtung 34 und den Scheibenlagern 66, 68 sorgen. Die Werkzeugspindeln 18a, 18b holen Werkzeuge an den Scheibenlagern 66, 68 ab bzw. liefern dort Werkzeuge ab. (Der Ablieferungsvorgang bzw. Abholvorgang kann dabei aktiv durch die Werkzeugspindeln 18a, 18b durchgeführt werden, indem diese an die Scheibenlager 66, 68 heranfahren, oder es ist grundsätzlich ein passiver Vorgang möglich, indem, wenn die Scheibenlager 66, 68 an dem Schlitten 78 angeordnet sind, der Schlitten 78 an die Werkzeugspindeln 18a, 18b heranfährt. Es ist auch eine kombinierte aktivische Anfahrung sowohl der Werkzeugspindeln 18a, 18b als auch des Schlittens 78 möglich.)

Die jeweiligen Scheibenlager 66, 68 nehmen eine geringere Anzahl von Werkzeugen auf als die Lagereinrichtung 34.

Grundsätzlich weist das Lagersystem 48 mit dem Hintergrundmagazin (die Lagereinrichtung 34) um den Pufferspeicher (dem ersten Scheibenlager 66 und dem zweiten Scheibenlager 68) eine große Kapazität zur Aufnahme von Werkzeugen auf. Da in den Scheibenlagern 66, 68 eine größere Anzahl von Werkzeugen vorgehalten werden können und diese direkt am Rand des Arbeitsraums 38 liegen, lässt sich auch bei komplexeren Bearbeitungsvorgängen, bei denen mehrere Werkzeuge notwendig sind, eine kurze Bereitstellungszeit für Werkzeuge für die Werkzeugspindeln 18a, 18b realisieren. Es ergibt sich dabei eine kurze Span-zu-Span-Zeit von beispielsweise kleiner als 3 s.

Durch das Hintergrundmagazin 34 lässt sich auf einfache und schnelle Weise auch ein Werkzeugaustausch an den Scheibenlagern 66, 68 durchführen.

Da jeder Werkzeugspindel 18a, 18b ein und insbesondere genau ein Scheibenlager 66 bzw. 68 zugeordnet ist, lässt sich ein schneller Werkzeugwechsel auch vorsehen, wenn ein Werkzeugwechsel an mehreren Werkzeugspindeln insbesondere synchron erfolgen soll. Insbesondere lassen sich dadurch synchrone Bearbeitungsvorgänge an zwei Werkstücken innerhalb der gleichen Werkzeugmaschinen mit kurzen Span-zu-Span-Zeiten durchführen.

Eine entsprechende Werkzeugmaschine ist in der internationalen Anmeldung PCT/EP2012/067368 vom 6. September 2012 beschrieben, auf die ausdrücklich Bezug genommen wird. Eine weitere Werkzeugmaschine, bei welcher die zweite Lagereinrichtung eine Kettenlagereinrichtung ist, ist in der internationalen Anmeldung PCT/EP2012/067310 vom 5. September 2012 beschrieben, auf die ausdrücklich Bezug genommen wird.

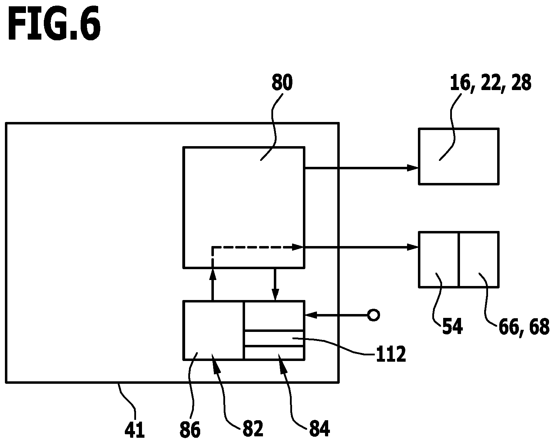

Die Steuerungseinrichtung 41 (Figur 6) umfasst eine Steuerung 80 zur Steuerung der Bewegungsabläufe eines Bearbeitungsprozesses an einem Werkstück. Die Steuerung 80 steuert dabei insbesondere die Werkzeugträgereinrichtung 16, die Schlitten 22, 28 usw. an. Ferner steuert sie die erste Lagereinrichtung 54 und die zweite Lagereinrichtung 66, 68 an.

Die Steuerungseinrichtung 41 umfasst ferner eine Werkzeugwechseleinheit 82. Die Werkzeugwechseleinheit 82 dient, wie untenstehend noch näher beschrieben wird, zur Bereitstellung von Daten an die Steuerung 80, mittels welcher diese Werkzeug-Bereitstellungsvorgänge steuert.

Bei einem Ausführungsbeispiel umfasst die Werkzeugwechseleinheit 82 eine Ermittlungsstufe 84 und eine Steuerungsstufe 86. Die Ermittlungsstufe 84 ermittelt Daten für einen Bearbeitungsprozess und die Steuerungsstufe 86 stellt nach Auswertung dieser Daten Daten der Steuerung 80 zur direkten Ansteuerung der ersten Lagereinrichtung 34 und der zweiten Lagereinrichtung 67 bereit.

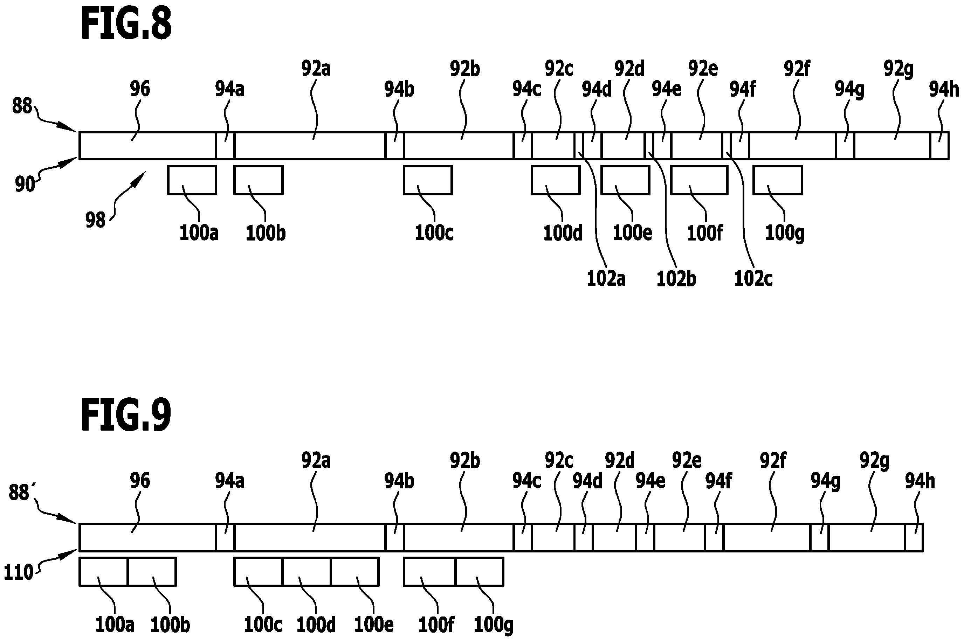

In Figur 8 ist schematisch ein Bearbeitungsprozess 88 für ein Werkstück an der Werkzeugmaschine 10 in seiner zeitlichen Abfolge gezeigt. Dieser Bearbeitungsprozess 88 umfasst eine Sequenz 90 von Bearbeitungsvorgängen 92a, 92b usw. Die jeweiligen Bearbeitungsvorgänge sind Bearbeitungsvorgänge in der Werkzeugmaschine 10 an einem Werkstück. Unterschiedliche Bearbeitungsvorgänge werden beispielsweise mit unterschiedlichen Werkzeugen durchgeführt. Zwischen benachbarten Bearbeitungsvorgängen 92a, 92b usw. umfasst die Sequenz 90 jeweilige Werkzeugwechselvorgänge 94a, 94b usw. Während eines entsprechenden Werkzeugwechselvorgangs 94a wird von der zweiten Lagereinrichtung 67 nach Auswechseln des für den vorhergehenden Bearbeitungsvorgang benutzten Werkzeugs an der Werkzeugspindel 18a beziehungsweise 18b in diese das für den nächsten Bearbeitungsvorgang benötigte Werkzeug eingewechselt.

Der Bearbeitungsprozess 88 umfasst auch einen Werkstückwechselvorgang 96, welcher am Anfang der Sequenz 90 steht. Bei diesem Werkstückwechselvorgang 96 erfolgt die Beladung eines Werkstücks an dem Werkstückträger 92.

Die Sequenz 90 weist für ein bestimmtes Werkstück eine bestimmte Zeitdauer auf, die sich zusammensetzt als Summe der entsprechenden Zeitdauern der einzelnen Bearbeitungsvorgänge 92a usw., des Werkstückwechselvorgangs 96 sowie der einzelnen Werkzeugwechselvorgänge 94a usw.

Damit die unterschiedlichen Bearbeitungsvorgänge 92a usw. durchgeführt werden können, muss am Anfang des jeweiligen Bearbeitungsvorgangs das jeweils notwendige Werkzeug an der Werkzeugspindel 18a beziehungsweise 18b eingewechselt sein. Dazu muss das entsprechende Werkzeug von der ersten Lagereinrichtung 34 der zweiten Lagereinrichtung 67 bereitgestellt werden, so dass während des Werkzeugwechselvorgangs 94a usw. das für den nächsten Bearbeitungsvorgang notwendige Werkzeug vorhanden ist.

Der Sequenz 90 ist eine Sequenz 98 für Werkzeugbereitstellungsvorgänge 100a, 100b usw. durch die Lagereinrichtungen 34 und 67 zugeordnet. Jeder Bearbeitungsvorgang 92a, 92b usw. erfolgt mit einem bestimmten Werkzeug. Vor dem Bearbeitungsvorgang muss dieses bestimmte Werkzeug an der entsprechenden Werkzeugspindel 18a, 18b eingewechselt werden. Vor der Einwechslung wiederum muss dieses bestimmte Werkzeug bereitgestellt werden, das heißt es muss von der ersten Lagereinrichtung 34 der zweiten Lagereinrichtung 67 übergeben werden, damit überhaupt ein Einwechselvorgang stattfinden kann.

Die Übergabe eines Werkzeugs von der ersten Lagereinrichtung 34 an die zweite Lagereinrichtung 67 erfolgt an einer bestimmten Übergabeposition. Diese Übergabeposition wird durch Bewegung dieses bestimmten Werkzeuges mit der ersten Lagereinrichtung erreicht (und gegebenenfalls durch Bewegung an der zweiten Lagereinrichtung). Ausgehend von einer bestimmten Position eines solchen bestimmten Werkzeugs in der ersten Lagereinrichtung wird eine gewisse Positionierzeit t₁ benötigt, um dieses bestimmte Werkzeug von seiner aktuellen Position an die Übergabeposition zu der zweiten Lagereinrichtung zu bewegen. Die Übergabe selber benötigt eine Zeit t₂.

Eine Werkzeugbereitstellungszeit ist demnach t_{b}=t₁+t₂. Diese Zeit t_{b} kann für unterschiedliche Werkzeuge unterschiedlich sein, insbesondere abhängig von der Position eines gegebenen Werkzeugs in der ersten Lagereinrichtung und der dann benötigten Zeit, um diese zu der Übergabeposition zu bringen. Die Zeit t₂ kann zumindest näherungsweise als konstant angesehen werden.

Die Sequenz 98 ist so ausgestaltet, dass vor einem Werkzeugwechselvorgang 94a usw. das entsprechende Werkzeug bereitgestellt ist.

Es kann dabei vorkommen, wie in Figur 8 mit den Bezugszeichen 102a, b, c angedeutet, dass ein Werkzeug-Bereitstellungsvorgang (in dem Beispiel der Werkzeug-Bereitstellungsvorgang 100d, 100e und 100f) länger dauert wie der momentan dauernde Bearbeitungsvorgang, das heißt der Bearbeitungsvorgang vor dem nächsten Bearbeitungsvorgang, der das bereitgestellte Werkzeug benötigt. Dadurch entstehen in der Sequenz 90 des Bearbeitungsprozesses 88 Wartezeiten 102a, 102b, 102c, das heißt die Werkzeug-Bereitstellungsvorgänge verlängern die Dauer des Bearbeitungsprozesses 88.

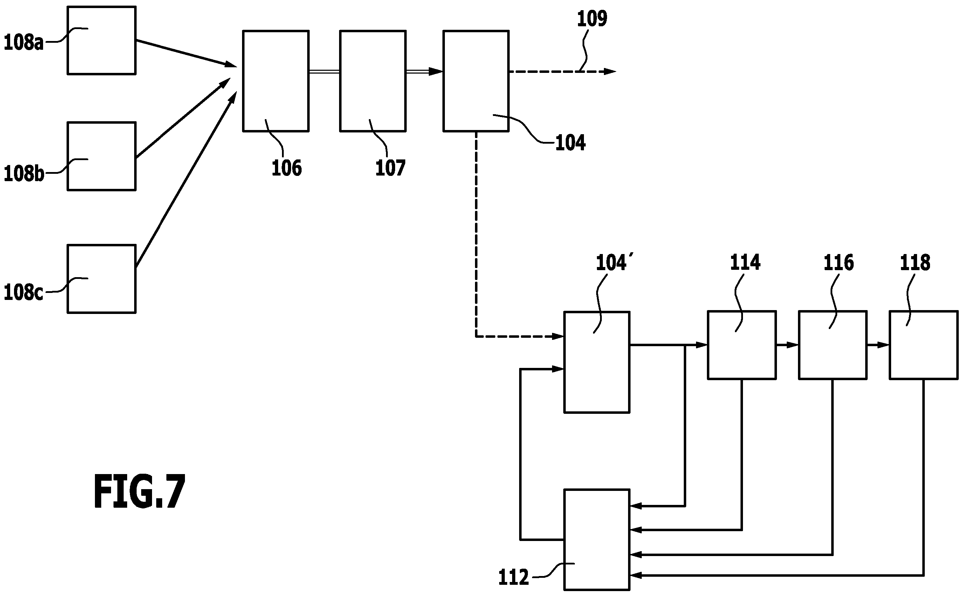

Die Sequenz 98 für Werkzeug-Bereitstellungsvorgänge ist in einer Werkzeug-Vorbereitungstabelle 104 beziehungsweise 104' gespeichert (vgl. Figur 7). Die Werkzeug-Vorbereitungstabelle 104 ist eine statische Werkzeug-Vorbereitungstabelle, bei welcher die gespeicherten Daten zeitlich unveränderlich sind. Die Werkzeug-Vorbereitungstabelle 104' ist eine dynamische Werkzeug-Vorbereitungstabelle, bei welcher sich die gespeicherten Daten zeitlich verändern können. Dies wird untenstehend noch erläutert. Aufgrund der Daten in der Werkzeug-Vorbereitungstabelle 104 beziehungsweise 104', welche von der Steuerungsstufe 86 der Steuerung 80 bereitgestellt werden, erfolgt die tatsächliche Werkzeugvorbereitung.

Erfindungsgemäß wird ein Verfahren bereitgestellt, mit dem sich Wartezeiten verringern lassen und im günstigsten Falle eliminieren lassen, so dass die Zeitdauer des Bearbeitungsprozesses 88, das heißt die Länge der Sequenz 90, unabhängig ist von Werkzeug-Bereitstellungsvorgängen 100a usw.

Die Ermittlungsstufe 84 ermittelt in dem Bearbeitungsprozess 88 bei einer tatsächlichen Arbeitsabfolge die Zeitdauern der Bearbeitungsvorgänge 92a, 92b usw. und die Zeitdauer des Werkstückwechselvorgangs 96. Weiterhin ermittelt sie die Zeitdauern der Werkzeug-Bereitstellungsvorgänge 100a, 100b usw.

In dem Ablaufdiagramm gemäß Figur 7 ist der Ermittlungsvorgang schematisch durch das Bezugszeichen 106 angedeutet. In diesen geht eine Arbeitsabfolge 108a in dem Bearbeitungsprozess 88 beispielsweise aus einer Arbeitsfolgetabelle ein, eine Belegung 108b des Hintergrundmagazins 34a, welche die Zeitdauern von Werkstückwechselvorgängen 96 bestimmen, und tatsächliche Bearbeitungszeiten 108c der Bearbeitungsvorgänge 92a usw.

Diese Ermittlung kann auf unterschiedliche Art und Weise erfolgen.

Bei einer Ausführungsform erfolgt aufgrund der vorhandenen Daten eine Off-line-Simulation oder es erfolgt eine Berechnung und dadurch ergibt sich dann die statische Werkzeug-Vorbereitungstabelle 104.

Es kann auch eine Online-Ermittlung an der Werkzeugmaschine 10 durchgeführt werden. Dazu wird der Bearbeitungsprozess 88 (Teileprogramm) ohne Einfluss der Werkzeugwechseleinheit 82 durchlaufen und wird insbesondere einmal durchlaufen. Es wird dabei durch ein entsprechendes Programm in der Steuerung 80 oder in der Werkzeugwechseleinheit 82 die Reihenfolge der Werkzeuge und der Bearbeitungszeiten dokumentiert und die entsprechenden Daten werden abgelegt.

Es wird dann durch das erfindungsgemäße Verfahren in der Steuerungsstufe 86 eine Optimierung durchgeführt. Dieser Vorgang ist in Figur 8 mit dem Bezugszeichen 107 angedeutet.

Bei dem erfindungsgemäßen Verfahren, welches in der Steuerungsstufe 86 durchgeführt wird, werden nun die Werkzeug-Bereitstellungsvorgänge bei Bedarf so umgruppiert, dass Wartezeiten 102a usw. minimiert und insbesondere eliminiert werden. Das Ergebnis ist die statische Werkzeug-Vorbereitungstabelle 104.

Werkzeug-Bereitstellungsvorgänge werden dabei in der Sequenz 98 in Zuordnung zu der Sequenz 90 so umgruppiert, dass Werkzeug-Bereitstellungsvorgänge möglichst innerhalb von Bearbeitungsvorgängen 92a usw. erfolgen und ein Zeitintervall eines Werkzeug-Bereitstellungsvorgangs 100a usw. nicht über ein Ende eines Bearbeitungsvorgangs 92a usw. beziehungsweise eines Werkstückwechselvorgangs 96 hinausgeht, um eben den Bearbeitungsprozess 88 nicht zu verlängern. Es liegen dann Werkzeug-Bereitstellungsvorgänge 100a usw. zeitlich vollständig im Zeitintervall des Werkstückwechselvorgangs 96 beziehungsweise der entsprechenden Bearbeitungsvorgänge 92a, 92b usw. Die Werkzeug-Bereitstellungsvorgänge 100a usw. müssen dabei aber natürlich so erfolgen, dass für den jeweiligen Bearbeitungsvorgang das notwendige Werkzeug bereitgestellt ist.

Bei einem Ausführungsbeispiel wird für alle relevanten Schritte in der Sequenz 90 der Werkzeugwechseleinheit 92 eine Positionierzeit t₁ ermittelt, die der Zeitdauer entspricht, die benötigt wird, um ein bestimmtes Werkzeug in der ersten Lagereinrichtung 34 (Hintergrundmagazin) in die Übergabeposition zu bringen. Dazu wird beispielsweise eine Platznummer des benötigten Werkzeugs in der ersten Lagereinrichtung ermittelt und eine Istposition der ersten Lagereinrichtung. In Abhängigkeit von der Geschwindigkeit der ersten Lagereinrichtung, welche insbesondere eine Kette umfasst, ist die Positionierzeit t₁ dann vorgegeben.

Die Übergabezeit t₂ zwischen der ersten Lagereinrichtung und der zweiten Lagereinrichtung wird beispielsweise als Festwert angesetzt.

Die Bereitstellungszeit t_{b}=t₁+t₂ wird dann geprüft in Relation zu der Zeitdauer T des Bearbeitungsvorgangs 92a usw. Wenn diese Prüfung ergeben hat, dass T ≥ t_{b} wird ein Auftrag zur Werkzeug-Bereitstellung generiert. Dieser Auftrag wird dann von der Steuerungsstufe 86 der Steuerung 80 übergeben. Wenn T ≤ t_{b} und T > t₁, dann wird ein Auftrag zur Vorpositionierung des Werkzeugs an der ersten Lagereinrichtung gegeben.

Im Falle des Werkstückwechselvorgangs 96 ist die zur Verfügung stehende Zeit eine Werkstückbeladezeit T_{w}. Für die meisten Fälle kann die Werkstückbeladezeit T_{w} als fest angenommen werden. Es wird die gleiche Prüfung wie oben durchgeführt.

Es ist grundsätzlich möglich, dass mehrere Werkzeug-Bereitstellungsvorgänge 100a, 100b während eines Werkstückwechselvorgangs 96 und/oder eines Bearbeitungsvorgangs 92a usw. stattfinden können, in Abhängigkeit von den entsprechenden Zeiten T_{w} und T. Ist insbesondere nach der Vorbereitung eines Werkzeugs noch Zeit zur Vorbereitung des Wechselwerkzeugs vorhanden, so wird durch die Steuerungsstufe 96 der nächste Auftrag zur Werkzeug-Bereitstellung kreiert.

Beispielsweise wird, nachdem einem Werkstückwechselvorgang 96 beziehungsweise einem Bearbeitungsvorgang 92a usw. eine entsprechende Werkzeug-Bereitstellung zugeordnet wurde, geprüft, ob die Zeitdifferenz zwischen Ende des entsprechenden Bearbeitungsvorgangs (beispielsweise 92a) und dem Ende des ersten Werkzeug-Bereitstellungsvorgangs (beispielsweise 100a) noch ausreicht für einen weiteren Werkzeug-Bereitstellungsvorgang. Falls diese Zeit ausreicht, wird ein nächster Werkzeug-Bereitstellungsvorgang durchgeführt, wobei insbesondere eine Vorpositionierung des Werkzeugs an der ersten Lagereinrichtung erfolgen kann.

Ist diese Zeit nicht vorhanden, dann wird auf den zeitlich nächstfolgenden Bearbeitungsvorgang in der Sequenz 90 gegangen und es werden die entsprechenden Bedingungen durchgeführt.

In Figur 9 ist das Ergebnis einer entsprechenden Sequenz 110 für Werkzeug-Bereitstellungsvorgänge gezeigt. Die Sequenz für Bearbeitungsvorgänge entspricht der Sequenz 88. In Figur 9 ist sie jedoch mit dem Bezugszeichen 88' versehen, da durch das erfindungsgemäße Verfahren Wartezeiten 102a, 102b, 102c eliminiert wurden. Diese Sequenz 88' wird in der Werkzeug-Vorbereitungstabelle 104 gespeichert.

Bei dem Ausführungsbeispiel gemäß den Figuren 8 und 9 wurden durch die entsprechenden in der Steuerungsstufe durchgeführten Prüfungen und Berechnungen die Werkzeug-Bereitstellungsvorgänge 100a, 100b in dem Zeitintervall des Werkstückwechsel 96 gruppiert. Die Werkzeug-Bereitstellungsvorgänge 100c, 100d, 100e wurden in dem Bearbeitungsvorgang 92a positioniert. Die Werkzeugbereitstellungsvorgänge 100f und 100g wurden umgruppiert in den Bearbeitungsvorgang 92b. Dadurch müssen während den zeitlich kurzen Bearbeitungsvorgängen 92c, 92e keine Werkzeug-Bereitstellungsvorgänge mehr vorgesehen werden und die Wartezeiten 102a, 102b, 102c werden eliminiert.

Die Ergebnisse, das heißt insbesondere die Sequenz 88' und 110 werden dann von der Steuerungsstufe 86 an die Steuerung 80 übergeben. In Figur 8 ist dies mit dem Pfeil 109 angedeutet. Bei einem tatsächlichen Bearbeitungsprozess werden dann die entsprechenden Teile der Werkzeugmaschine 10 so angesteuert, dass sich die in Figur 9 geschilderte Sequenzfolge ergibt.

Grundsätzlich sind die Sequenzen 88, 90 beziehungsweise dann 88' und 110 abhängig von dem verwendeten Werkstück. Die entsprechenden Ermittlungen und Berechnungen sind folglich pro Werkstücktyp durchzuführen.

Bei einer Ausführungsform wird prinzipiell die Sequenz 110 und die resultierende Sequenz 88' einmal ermittelt. Es handelt sich dann um eine Art von Simulation. Diese ermittelten Sequenzen werden dann festgelegt verwendet, um die Werkzeugmaschine 10 zu steuern.

Bei einer vorteilhaften Ausführungsform umfasst die Werkzeugwechseleinheit 82 eine Beobachtungsstufe 112 (Figur 7). Die Beobachtungsstufe 112 ermittelt auch während einer tatsächlichen Werkstückbearbeitung die entsprechenden Zeitdauern in den Sequenzen der Bearbeitungsvorgänge (einschließlich Werkstückwechselvorgang 96) und Werkzeug-Bereitstellungsvorgängen. Insbesondere erfolgt eine Ermittlung in Echtzeit.

Dies ist in Figur 7 angedeutet. Ausgehend von einer Werkzeug-Vorbereitungstabelle 104 ist die tatsächliche Bearbeitung an der Werkzeugmaschine 10 gesteuert. Es erfolgt dazu eine entsprechende Werkzeugvorbereitung 114, entsprechende Einstellungen 116 an der Werkzeugmaschine 10 und ein tatsächlicher Prozess 118 wird durchgeführt. Die Beobachtungsstufe 112 beobachtet diese Aktionen und enthält eine entsprechende Rückmeldung. Die Beobachtungsstufe 112 wertet die Rückmeldungen aus und veranlasst eine Modifikation der Daten in der Werkzeug-Vorbereitungstabelle 104 sofern notwendig, das heißt die Sequenz 88' wird modifiziert. Diese wird dann, wenn eine solche Beobachtungsstufe 112 vorgesehen ist, zur dynamischen Werkzeug-Vorbereitungstabelle 104', bei welcher sich die entsprechenden Tabellendaten zeitlich in Abhängigkeit der Vorgänge 114, 116, 118 ändern können.

Die dynamische Werkzeug-Vorbereitungstabelle 104' entsteht beispielsweise aus der statischen Werkzeug-Vorbereitungstabelle 104, welche in dem Schritt 106 ermittelt wurde, durch den Einfluss der Beobachtungsstufe 112.

Die Beobachtungsstufe 112 ist dazu beispielsweise an die Steuerung 80 gekoppelt und erhält die entsprechenden Daten, um "in situ" die entsprechenden Zeitdauern zu ermitteln.

Ausgehend von den tatsächlich vorhandenen Zeitdauern werden dann die Optimierungen auch während des Bearbeitungsprozesses durchgeführt. Insbesondere werden während des Bearbeitungsprozesses ständig Sequenzen 88' und 110 neu berechnet und, wenn eine Neugruppierung notwendig ist, wird diese durchgeführt und die entsprechenden Aufträge werden über die Steuerungsstufe 86 und die Steuerung 80 übermittelt.

Es wird dadurch ein selbstlernendes System bereitgestellt, welches auch während des Bearbeitungsprozesses Umgruppierungen ermöglicht.

Grundsätzlich können sich während einer Werkstückbearbeitung Parameter bei Bearbeitungsvorgängen, Werkstückwechselvorgängen und Werkzeug-Bereitstellungsvorgängen ändern. Beispielsweise kann sich die Geschwindigkeit der ersten Lagereinrichtung ändern oder bestimmte Bearbeitungsvorgänge können länger dauern als in der statischen Werkzeug-Vorbereitungstabelle 104 enthalten usw. Durch die Beobachtungsstufe 112 in Echtzeit kann eine Optimierung und Überprüfung auch während des Bearbeitungsvorgangs erfolgen und die Daten der Werkzeug-Vorbereitungstabelle 104' werden dynamisch angepasst.

Es ist aber grundsätzlich auch möglich, dass über die statische Werkzeug-Vorbereitungstabelle 104 die entsprechende Werkzeugvorbereitung erfolgt.

### Bezugszeichenliste

- 10: Bearbeitungszentrum
- 12: Maschinenbett
- 14: Maschinengestell
- 16: Werkzeugträgereinrichtung
- 18a: Erste Werkzeugspindel
- 18b: Zweite Werkzeugspindel
- 20a: Rotationsachse
- 20b: Rotationsachse
- 22: Schlitten
- 24: Schlittenführung
- 26: Antriebseinrichtung
- 28: Schlitten
- 30: Schlittenführung
- 32: Werkstückträger
- 34: Erste Lagereinrichtung
- 36: Werkzeug
- 38: Arbeitsraum
- 40: Werkzeugwechseleinrichtung
- 41: Steuerungseinrichtung
- 42: Schaltkasten
- 44: Vorderseite
- 46: Rückseite
- 48: Lagersystem
- 50: Erster Bereich
- 52: Zweiter Bereich
- 54: Umlauffördereinrichtung
- 56: Lagerplatz
- 58: Werkzeug
- 60: Bereich
- 62: Unterseite
- 64: Boden
- 66: Erstes Scheibenlager
- 67: Zweite Lagereinrichtung
- 68: Zweites Scheibenlager
- 70: Achse
- 72: Lagerplatz
- 74: Übergabestation
- 76: Platz
- 78: Schlitten
- 80: Steuerung
- 82: Werkzeugwechseleinheit
- 84: Ermittlungsstufe
- 86: Steuerungsstufe
- 88: Bearbeitungsprozess
- 90: Sequenz
- 92a, b: Bearbeitungsvorgang
- 94a, b: Werkzeugwechselvorgang
- 96: Werkstückwechselvorgang
- 98: Sequenz
- 100a, b: Werkzeug-Bereitstellungsvorgang
- 102a, b, c: Wartezeit
- 104: Statische Werkzeug-Vorbereitungstabelle
- 104': Dynamische Werkzeug-Vorbereitungstabelle
- 106: Ermittlungsvorgang
- 107: Optimierung
- 108a: Arbeitsabfolge
- 108b: Belegung des Hintergrundmagazins
- 108c: Zeitdauern von Bearbeitungsvorgängen
- 109: Übergabe
- 112: Beobachtungsstufe
- 114: Werkzeugvorbereitung
- 116: Einstellungen
- 118: Prozess

## Patentansprüche

1. Verfahren zur Steuerung von Werkzeugwechselvorgängen an einer Werkzeugmaschine, wobei die Werkzeugmaschine umfasst:
- ein Maschinengestell;
- mindestens eine Werkzeugspindel, welche an dem Maschinengestell angeordnet ist und relativ zu diesem verschieblich ist;
- eine erste Lagereinrichtung für Werkzeuge; und
- eine zweite Lagereinrichtung für Werkzeuge, welche in Kommunikation mit der ersten Lagereinrichtung und der mindestens einen Werkzeugspindel steht, wobei ein Werkzeugwechsel an der mindestens einen Werkzeugspindel über die zweite Lagereinrichtung erfolgt,
wobei ein Bearbeitungsprozess an einem Werkstück eine Sequenz von Bearbeitungsvorgängen mit jeweils einem bestimmten Werkzeug und jeweils einer bestimmten Zeitdauer umfasst und für einen Werkzeugwechsel Werkzeuge der mindestens einen Werkzeugspindel durch die zweite Lagereinrichtung in Kommunikation mit der ersten Lagereinrichtung bereitgestellt werden, und wobei dem Bearbeitungsprozess eine Sequenz von Werkzeug-Bereitstellungsvorgängen zugeordnet ist, bei der ein Werkzeug-Bereitstellungsvorgang jeweils eine bestimmte Zeitdauer aufweist,
wobei das Verfahren eine Ermittlungsstufe und eine Steuerungsstufe umfasst und in der Ermittlungsstufe für den Bearbeitungsprozess die Zeitdauern der Bearbeitungsvorgänge und der Werkzeug-Bereitstellungsvorgänge ermittelt werden und in der Steuerungsstufe die Werkzeug-Bereitstellungsvorgänge so zeitlich in Relation zu den Bearbeitungsvorgängen gruppiert werden, dass die Werkzeug-Bereitstellungsvorgänge eine minimierte Wartezeit in dem Bearbeitungsprozess bewirken, **dadurch gekennzeichnet, dass** in der Steuerungsstufe Werkzeug-Bereitstellungsvorgänge in der zeitlichen Zuordnung zu Bearbeitungsvorgängen umgruppiert werden, um die Wartezeiten zu minimieren.

2. Verfahren nach Anspruch 1, **dadurch gekennzeichnet, dass** die Zeitdauer eines Bearbeitungsprozesses an einem Werkstück sich zusammensetzt aus der Zeitdauer eines Werkstückwechselvorgangs, den Zeitdauern der einzelnen Bearbeitungsvorgänge, den Zeitdauern von Werkzeugwechselvorgängen zwischen Bearbeitungsvorgängen und Wartezeiten für Werkzeug-Bereitstellungsvorgänge, wobei ein Steuerungsziel der Steuerungsstufe ist, diese Wartezeiten zu minimieren und insbesondere zu eliminieren, und insbesondere, dass das Steuerungsziel der Steuerungsstufe ist, dass die Zeitdauer des Bearbeitungsprozesses unabhängig von Werkzeug-Bereitstellungsvorgängen ist oder wird.

3. Verfahren nach einem der vorangehenden Ansprüche, **dadurch gekennzeichnet, dass** die Werkzeug-Bereitstellungsvorgänge in dem Zeitintervall von Bearbeitungsvorgängen durchgeführt werden.

4. Verfahren nach einem der vorangehenden Ansprüche, **dadurch gekennzeichnet, dass** ein oder mehrere Werkzeug-Bereitstellungsvorgänge zwischen Anfang und Ende eines Zeitintervalls eines Bearbeitungsvorgangs gruppiert werden, wobei ein Steuerungsziel ist, dass das Ende des Zeitintervalls des Bearbeitungsvorgangs nicht überschritten wird.

5. Verfahren nach einem der vorangehenden Ansprüche, **dadurch gekennzeichnet, dass** in der Ermittlungsstufe und der Steuerungsstufe ein Werkstückwechsel mit seiner jeweiligen Zeitdauer berücksichtigt wird, wobei die Zeitdauer eines Werkstückwechsels ermittelt wird und gegebenenfalls ein oder mehrere Werkzeug-Bereitstellungsvorgänge in das Zeitintervall des Werkstückwechselvorgangs gruppiert werden.

6. Verfahren nach einem der vorangehenden Ansprüche, **dadurch gekennzeichnet, dass** im Bearbeitungsprozess zwischen unterschiedlichen Bearbeitungsvorgängen ein Werkzeugwechsel an der mindestens einen Werkzeugspindel erfolgt.

7. Verfahren nach einem der vorangehenden Ansprüche, **gekennzeichnet durch** eine Simulationsstufe, bei der in der Ermittlungsstufe die Zeitdauern für Bearbeitungsvorgänge und/oder Werkzeug-Bereitstellungsvorgänge berechnet und/oder vorgegeben werden.

8. Verfahren nach einem der vorangehenden Ansprüche, **dadurch gekennzeichnet, dass** die Zeitdauern aus einer Arbeitsfolgetabelle für die Bearbeitungsvorgänge und einer Tabelle für eine Lagereinrichtungsbelegung berechnet und/oder vorgegeben werden.

9. Verfahren nach einem der vorangehenden Ansprüche, **gekennzeichnet durch** eine Beobachtungsstufe, in der die Zeitdauern durch Beobachtung der tatsächlichen Vorgänge gemessen werden, und insbesondere, dass die Beobachtung in Echtzeit erfolgt, und insbesondere, dass die Beobachtungsstufe eine Einheit umfasst, welche an eine Steuerung der Werkzeugmaschine für den Bearbeitungsprozess gekoppelt ist, und insbesondere, dass während eines Bearbeitungsprozesses ausgelöst durch die Beobachtungsstufe bei Bedarf eine oder mehrere Änderungen in der Steuerungsstufe bezüglich Werkzeug-Bereitstellungsvorgängen erfolgt, und insbesondere, dass die Änderung oder Änderungen so erfolgen, dass die zeitliche Positionierung von einem oder mehreren Werkzeug-Bereitstellungsvorgängen in der Sequenz von Werkzeug-Bereitstellungsvorgängen geändert wird.

10. Verfahren nach einem der vorangehenden Ansprüche, **dadurch gekennzeichnet, dass** in der Ermittlungsstufe eine Positionierzeit (t₁) für ein Werkzeug an der ersten Lagereinrichtung zur Übergabe an die zweite Lagereinrichtung und eine Übergabezeit (t₂) für die Übergabe ermittelt wird, wobei die Summe dieser Zeiten eine Zeitdauer eines Werkzeug-Bereitstellungsvorgangs ist, und geprüft wird, wie diese Zeitdauer zu der Zeitdauer (T) eines Bearbeitungsvorgangs liegt, und insbesondere, dass, wenn die Zeitdauer des Bearbeitungsvorgangs größer oder gleich wie die Zeitdauer des Werkzeug-Bereitstellungsvorgangs ist, in der Steuerungsstufe ein Auftrag zur Werkzeug-Bereitstellung generiert wird, und insbesondere, dass, wenn die Zeitdauer des Bearbeitungsvorgangs kleiner ist als die Zeitdauer der Werkzeug-Bereitstellung und größer ist als die Positionierzeit (t₁), die Steuerungsstufe einen Auftrag zur Vorpositionierung der ersten Lagereinrichtung generiert, und insbesondere, dass geprüft wird, ob in einem Zeitintervall eines Bearbeitungsvorgangs, in dem ein Auftrag für einen Werkzeug-Bereitstellungsvorgang ergangen ist, dann noch Aufträge für einen oder mehrere weitere Werkzeug-Bereitstellungsvorgänge erteilbar sind.

11. Verfahren nach einem der vorangehenden Ansprüche, **dadurch gekennzeichnet, dass** mindestens einmal der Bearbeitungsprozess ohne Eingriff der Steuerungsstufe durchgeführt wird und die Zeitdauern ermittelt werden, und insbesondere, dass anschließend Zeitpunkte zur Werkzeug-Bereitstellung berechnet werden, und insbesondere, dass die berechneten Zeitpunkte für die Werkzeug-Bereitstellung verwendet werden.

12. Verfahren nach einem der vorangehenden Ansprüche, **gekennzeichnet durch** eine Implementierung in einer Steuerungseinrichtung der Werkzeugmaschine, wobei insbesondere in der Steuerungsstufe Aufträge für die Werkzeug-Bereitstellung generiert werden.

13. Verfahren nach einem der vorangehenden Ansprüche, **dadurch gekennzeichnet, dass** die erste Lagereinrichtung ein Hintergrundmagazin für die zweite Lagereinrichtung ist, und insbesondere, dass die zweite Lagereinrichtung ein Magazin pro Werkzeugspindel umfasst.

14. Werkzeugmaschine, umfassend ein Maschinengestell (14), mindestens eine Werkzeugspindel (18a; 18b), welche an dem Maschinengestell (14) angeordnet ist und relativ zu diesem verschieblich ist, eine erste Lagereinrichtung (34) für Werkzeuge und eine zweite Lagereinrichtung (67) für Werkzeuge, welche in Kommunikation mit der ersten Lagereinrichtung (34) und der mindestens einen Werkzeugspindel (18a; 18b) steht, wobei ein Werkzeugwechsel an der mindestens einen Werkzeugspindel (18a; 18b) über die zweite Lagereinrichtung (67) erfolgt, **gekennzeichnet durch** eine Steuerungseinrichtung (41) zur Steuerung von Bearbeitungsvorgängen an der Werkzeugmaschine, welche eine Werkzeugwechseleinheit (82) umfasst, durch welche das Verfahren gemäß einem der vorangehenden Ansprüche durchgeführt wird.

15. Werkzeugmaschine nach Anspruch 14, **dadurch gekennzeichnet, dass** die erste Lagereinrichtung (34) an dem Maschinengestell (14) angeordnet ist und/oder dass die erste Lagereinrichtung (34) eine Mehrzahl von beweglichen Lagerplätzen aufweist und insbesondere eine Umlauffördereinrichtung umfasst.

## Claims

1. Method for controlling tool change operations on a machine tool,
wherein the machine tool comprises:
- a machine frame;
- at least one tool spindle which is arranged on the machine frame and is displaceable relative thereto;
- a first storage device for tools; and
- a second storage device for tools which is in communication with the first storage device and the at least one tool spindle, wherein a tool change at the at least one tool spindle takes place by way of the second storage device,
wherein a machining procedure on a workpiece comprises a sequence of machining operations having in each case a particular tool and in each case a particular duration, and for a tool change tools of the at least one tool spindle are provided by the second storage device in communication with the first storage device, and wherein there is associated with the machining procedure a sequence of tool provision operations in which a tool provision operation has in each case a particular duration,
wherein the method comprises a determination stage and a control stage, and in the determination stage for the machining procedure the durations of the machining operations and the tool provision operations are determined, and in the control stage the tool provision operations are temporally grouped in relation to the machining operations such that the tool provision operations bring about a minimized idle time in the machining procedure, **characterized in that** in the control stage tool provision operations are regrouped in temporal association with machining operations in order to minimize the idle times.

2. Method in accordance with Claim 1, **characterized in that** the duration of a machining procedure on a workpiece is composed of the duration of a workpiece change operation, the durations of the individual machining operations, the durations of tool change operations between machining operations, and idle times for tool provision operations, wherein a control objective of the control stage is to minimize and in particular to eliminate these idle times, and in particular **in that** the control objective of the control stage is for the duration of the machining procedure to be or to become independent of tool provision operations.

3. Method in accordance with any one of the preceding Claims, **characterized in that** the tool provision operations are carried out in the time interval of machining operations.

4. Method in accordance with any one of the preceding Claims, **characterized in that** one or more tool provision operations are grouped between the start and the end of a time interval of a machining operation, wherein a control objective is for the end of the time interval of the machining operation to not be exceeded.

5. Method in accordance with any one of the preceding Claims, **characterized in that** in the determination stage and the control stage, a workpiece change is taken into account with its respective duration, wherein the duration of a workpiece change is determined and where appropriate one or more tool provision operations are grouped into the time interval of the workpiece change operation.

6. Method in accordance with any one of the preceding Claims, **characterized in that**, in the machining procedure between different machining operations, a tool change takes place at the at least one tool spindle.

7. Method in accordance with any one of the preceding Claims, **characterized by** a simulation stage in which the durations for machining operations and/or tool provision operations are calculated and/or predetermined in the determination stage.

8. Method in accordance with any one of the preceding Claims, **characterized in that** the durations are calculated and/or predetermined from a work sequence table for the machining operations and a table for a storage device assignment.

9. Method in accordance with any one of the preceding Claims, **characterized by** an observation stage in which the durations are measured by observing the actual operations, and in particular in that the observation takes place in real time, and in particular in that the observation stage comprises a unit which is coupled to a control of the machine tool for the machining procedure, and in particular in that, during a machining procedure and triggered by the observation stage, one or more changes in the control stage regarding tool provision operations take place where necessary, and in particular in that the change or changes take place such that the temporal positioning of one or more tool provision operations in the sequence of tool provision operations is changed.

10. Method in accordance with any one of the preceding Claims, **characterized in that** a positioning time (t₁) for a tool at the first storage device for transfer to the second storage device, and a transfer time (t₂) for the transfer, are determined in the determination stage, wherein the sum of these times is a duration of a tool provision operation, and a check is made on how this duration relates to the duration (T) of a machining operation, and in particular **in that**, if the duration of the machining operation is greater or equal to the duration of the tool provision operation, then an instruction for the provision of a tool is generated in the control stage, and in particular **in that**, if the duration of the machining operation is less than the duration of the provision of a tool and is greater than the positioning time (t₁), then the control stage generates an instruction for prepositioning the first storage device, and in particular **in that** there is a check on whether, in a time interval of a machining operation in which an instruction for a tool provision operation has been issued, instructions for one or more further tool provision operations are still issuable.

11. Method in accordance with any one of the preceding Claims, **characterized in that** the machining procedure is carried out at least once without engaging the control stage, and the durations are determined, and in particular **in that** times are then calculated for the provision of a tool, and in particular **in that** the calculated times for the provision of a tool are used.

12. Method in accordance with any one of the preceding Claims, **characterized by** an implementation in a control device of the machine tool, wherein instructions for the provision of a tool are generated in particular in the control stage.

13. Method in accordance with any one of the preceding Claims, **characterized in that** the first storage device is a background magazine for the second storage device, and in particular **in that** the second storage device comprises one magazine per tool spindle.

14. Machine tool, comprising a machine frame (14), at least one tool spindle (18a; 18b) which is arranged on the machine frame (14) and is displaceable relative thereto, a first storage device (34) for tools, and a second storage device (67) for tools which is in communication with the first storage device (34) and the at least one tool spindle (18a; 18b), wherein a tool change at the at least one tool spindle (18a; 18b) takes place by way of the second storage device (67), **characterized by** a control device (41) for controlling machining operations at the machine tool, which comprises a tool change unit (82) by means of which the method in accordance with any one of the preceding Claims is performed.

15. Machine tool in accordance with Claim 14, **characterized in that** the first storage device (34) is arranged on the machine frame (14) and/or **in that** the first storage device (34) has a multitude of moveable storage positions and in particular comprises a circulating conveying device.

## Revendications

1. Procédé de commande de processus de changement d'outil sur une machine-outil, dans lequel la machine-outil comporte :
- un bâti de machine ;
- au moins une broche d'outil qui est disposée sur le bâti de machine et est mobile par rapport à celui-ci ;
- un premier dispositif de stockage pour des outils ; et
- un second dispositif de stockage pour des outils qui est en communication avec le premier dispositif de stockage et l'au moins une broche d'outil, dans lequel un changement d'outil est effectué sur l'au moins une broche d'outil par le biais du second dispositif de stockage,
dans lequel une procédure d'usinage sur une pièce comporte une séquence de processus d'usinage avec respectivement un outil déterminé et respectivement une durée déterminée et pour un changement d'outil des outils d'au moins une broche d'outil sont mis à disposition par le second dispositif de stockage en communication avec le premier dispositif de stockage, et dans lequel une séquence de processus de mise à disposition d'outil est associée à la procédure d'usinage, pour laquelle un processus de mise à disposition d'outil présente respectivement une durée déterminée,
dans lequel le procédé comporte une étape de détermination et une étape de commande et dans l'étape de détermination pour la procédure d'usinage les durées des processus d'usinage et des processus de mise à disposition d'outil sont déterminés et dans l'étape de commande les processus de mise à disposition d'outil sont groupés temporellement en relation avec les processus d'usinage de sorte que les processus de mise à disposition d'outil provoquent un temps d'attente minimisé dans le processus d'usinage, **caractérisé en ce que** dans l'étape de commande des processus de mise à disposition d'outil sont regroupés dans l'association temporelle aux processus d'usinage afin de minimiser les temps d'attente.

2. Procédé selon la revendication 1, **caractérisé en ce que** la durée d'une procédure d'usinage sur une pièce se compose de la durée d'un processus de changement de pièce, des durées des processus d'usinage individuels, des durées de processus de changement d'outil entre des processus d'usinage et des temps d'attente pour des processus de mise à disposition d'outil, dans lequel un objectif de commande de l'étape de commande est de minimiser ces temps d'attente et de les éliminer en particulier, et en particulier que l'objectif de commande de l'étape de commande est que la durée de la procédure d'usinage est ou sera indépendante des processus de mise à disposition d'outil.

3. Procédé selon l'une quelconque des revendications précédentes, **caractérisé en ce que** les processus de mise à disposition d'outil sont réalisés dans l'intervalle de temps des processus d'usinage.

4. Procédé selon l'une quelconque des revendications précédentes, **caractérisé en ce qu'**un ou plusieurs processus de mise à disposition d'outil sont groupés entre le début et la fin d'un intervalle de temps d'un processus d'usinage, dans lequel un objectif de commande est que la fin de l'intervalle de temps du processus d'usinage n'est pas dépassée.

5. Procédé selon l'une quelconque des revendications précédentes, **caractérisé en ce que** dans l'étape de détermination et l'étape de commande, un changement de pièce est pris en considération avec sa durée respective, dans lequel la durée d'un changement de pièce est déterminée et éventuellement un ou plusieurs processus de mise à disposition d'outil sont groupés dans l'intervalle de temps du processus de changement de pièce.

6. Procédé selon l'une quelconque des revendications précédentes, **caractérisé en ce qu'**un changement d'outil est effectué sur l'au moins une broche d'outil dans la procédure d'usinage entre différents processus d'usinage.

7. Procédé selon l'une quelconque des revendications précédentes, **caractérisé par** une étape de simulation, pour laquelle dans l'étape de détermination les durées pour des processus d'usinage et/ou des processus de mise à disposition d'outil sont calculées et/ou prédéfinies.

8. Procédé selon l'une quelconque des revendications précédentes, **caractérisé en ce que** les durées sont calculées et/ou prédéfinies à partir d'un tableau de successions des opérations pour les processus d'usinage et d'un tableau pour une occupation de dispositif de stockage.

9. Procédé selon l'une quelconque des revendications précédentes, **caractérisé par** une étape d'observation dans laquelle les durées sont mesurées par observation des processus réels, et en particulier que l'observation est effectuée en temps réel, et en particulier que l'étape d'observation comporte une unité qui est couplée à une commande de la machine-outil pour la procédure d'usinage, et en particulier que pendant une procédure d'usinage déclenchée par l'étape d'observation si besoin une ou plusieurs modifications sont effectuées dans l'étape de commande par rapport aux processus de mise à disposition d'outil, et en particulier que la modification ou les modifications sont effectuées de sorte que le positionnement temporel d'un ou de plusieurs processus de mise à disposition d'outil soient modifiés dans la séquence de processus de mise à disposition d'outil.

10. Procédé selon l'une quelconque des revendications précédentes, **caractérisé en ce que** dans l'étape de détermination, un temps de positionnement (t₁) pour un outil est déterminé sur le premier dispositif de stockage pour la remise au second dispositif de stockage et un temps de remise (t₂) pour la remise, dans lequel la somme de ces temps est une durée d'un processus de mise à disposition d'outil, et il est vérifié la manière dont cette durée se trouve par rapport à la durée (T) d'un processus d'usinage, et en particulier que, lorsque la durée du processus d'usinage est supérieure ou identique à la durée du processus de mise à disposition d'outil, dans l'étape de commande une application est générée pour la mise à disposition d'outil, et en particulier, que, lorsque la durée du processus d'usinage est inférieure à la durée de la mise à disposition d'outil et est supérieure au temps de positionnement (t₁), l'étape de commande génère une application de prépositionnement du premier dispositif de stockage, et en particulier, qu'il est vérifié si dans un intervalle de temps d'un processus d'usinage, dans lequel une application pour un processus de mise à disposition d'outil s'est produite, des applications pour un ou plusieurs autres processus de mise à disposition d'outil peuvent encore être délivrées ensuite.

11. Procédé selon l'une quelconque des revendications précédentes, **caractérisé en ce qu'**au moins une fois la procédure d'usinage est réalisée sans intervention de l'étape de commande et les durées sont déterminées, et en particulier, qu'ensuite des moments pour la mise à disposition d'outil sont calculés, et en particulier, que les moments calculés sont utilisés pour la mise à disposition d'outil.

12. Procédé selon l'une quelconque des revendications précédentes, **caractérisé par** une mise en oeuvre dans un dispositif de commande de la machine-outil, dans lequel en particulier des applications pour la mise à disposition d'outil sont générées dans l'étape de commande.

13. Procédé selon l'une quelconque des revendications précédentes, **caractérisé en ce que** le premier dispositif de stockage est un magasin d'arrière-plan pour le second dispositif de stockage, et en particulier, que le second dispositif de stockage comporte un magasin par broche d'outil.

14. Machine-outil, comprenant un bâti de machine (14), au moins une broche d'outil (18a ; 18b) qui est disposée sur le bâti de machine (14) et est mobile par rapport à celui-ci, un premier dispositif de stockage (34) pour des outils et un second dispositif de stockage (67) pour des outils qui est en communication avec le premier dispositif de stockage (34) et l'au moins une broche d'outil (18a ; 18b), dans laquelle un changement d'outil sur l'au moins une broche d'outil (18a ; 18b) est effectué par le biais du second dispositif de stockage (67), **caractérisée par** un dispositif de commande (41) pour la commande de processus d'usinage sur la machine-outil qui comporte une unité de changement d'outil (82) par laquelle le procédé selon l'une quelconque des revendications précédentes est réalisé.

15. Machine-outil selon la revendication 14, **caractérisée en ce que** le premier dispositif de stockage (34) est disposé sur le bâti de machine (14) et/ou que le premier dispositif de stockage (34) présente une pluralité d'emplacements de stockage mobiles et comporte en particulier un dispositif de transport rotatif.
